# EUROPEAN PATENT APPLICATION

(11) **EP 4 578 882 A1**
(43) Date of publication of application: **02.07.2025**
(21) Application number: 23857280.4
(22) Date of filing: 17.08.2023
(51) Int. Cl.: C08F 2/44, C08F 279/02, C08F 285/00, C08K 5/3475, C08K 5/405, C08K 5/521, C08L 9/02, C08L 21/00, C08L 51/04, C08L 63/10, C09J 4/02

(54) **CURABLE COMPOSITION, CURED PRODUCT, AND ARTICLE**

(30) Priority: 25.08.2022 JP 2022133920
(71) Applicant: Denka Company Limited, Tokyo 103-8338 (JP)
(72) Inventor: TAKAHASHI, Yusuke, Tokyo 103-8338 (JP); TAKANO, Chiaki, Tokyo 103-8338 (JP); KURIMURA, Hiroyuki, Tokyo 103-8338 (JP)
(74) Representative: Hoffmann Eitle
(86) International application number: PCT/JP2023/029723
(87) International publication number: WO 2024/043168

(57) **Abstract**

A curable composition including a polymerizable monomer having a carbon-carbon double bond, a radical polymerization initiator, an azole compound, an elastomer, and a reducing agent. In a case where a cured test film having a size of 50 mm × 10 mm × 1 mmt, which is obtained by sandwiching the curable composition between two PET films and aging the curable composition at 23°C for 24 hours, is immersed in pure water at 23°C for one week, a water absorption rate is 1.5% to 3.6%.

## Description

### TECHNICAL FIELD

The present invention relates to a curable composition, a cured product, and an article. More specifically, the present invention relates to a curable composition, a cured product of the curable composition, and an article including the cured product.

### BACKGROUND ART

The curable composition has been studied for improvement from various viewpoints due to its industrial importance. The curable composition is applied to, for example, an adhesive for bonding articles to each other.

Japanese Patent No. 4020236 describes a curable resin composition containing (1) a polymerizable vinyl monomer, (2) triazoles, (3) a reducing agent consisting of one or two or more kinds of compounds selected from the group consisting of a tertiary amine, a thiourea derivative, and a transition metal salt, (4) a polymerization initiator, and (5) an elastomer component. According to the description in Japanese Patent No. 4020236, since the curable resin composition exhibits high adhesiveness for a long period of time in a high temperature and high humidity exposure test, it is useful as an adhesive used for a motor.

### RELATED DOCUMENT

### PATENT DOCUMENT

Patent Document 1: Japanese Patent No. 4020236

### SUMMARY OF THE INVENTION

### TECHNICAL PROBLEM

In a case where a metal material is adhered using the curable composition as an adhesive, it is preferable that a decrease in adhesive force is suppressed for a long period of time. For example, in a case of being applied to the adhesion of a zinc-plated chromate steel plate, the curable composition with which a good adhesive force is maintained for a long period of time is industrially important.

The present inventors have conducted studies with one of objects of providing a curable composition in which decrease in an adhesive force is suppressed for a long period of time in a case of being used for adhesion of a metal material such as a zinc-plated chromate steel plate.

### SOLUTION TO PROBLEM

As a result of the investigations, the present inventors have completed the invention provided below.

The present invention is as follows.
1. A curable composition including: a polymerizable monomer having a carbon-carbon double bond; a radical polymerization initiator; an azole compound; an elastomer; and a reducing agent,
   in which, in a case where a cured test film having a size of 50 mm × 10 mm × 1 mmt, which is obtained by sandwiching the curable composition between two PET films and aging the curable composition at 23°C for 24 hours, is immersed in pure water at 23°C for one week, a water absorption rate is 1.5% to 3.6%.
2. The curable composition according to 1., the polymerizable monomer contains a (meth)acrylic monomer.
3. The curable composition according to 1. or 2., in which the polymerizable monomer contains a monofunctional (meth)acrylic monomer.
4. The curable composition according to any one of 1. to 3., in which the polymerizable monomer contains an epoxy (meth)acrylate.
5. The curable composition according to any one of 1. to 4., in which a ratio of monomers having two or more carbon-carbon double bonds in one molecule to all the polymerizable monomers is 0% to 10% by mass.
6. The curable composition according to any one of 1. to 5., in which the elastomer contains at least any one selected from the group consisting of an ABS-based resin and a nitrile butadiene rubber.
7. The curable composition according to any one of 1. to 6., further containing: an acidic phosphate compound represented by General Formula (A), 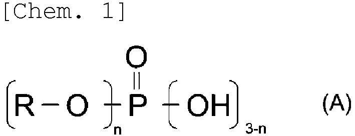 In General Formula (A), in a case where a plurality of R's are present, the R's each independently represent a group including a (meth)acryloyl group, and n is 1 or 2.
8. The curable composition according to 7., in which the curable composition includes, in General Formula (A), an acidic phosphate compound in which n is 1, and an acidic phosphate compound in which n is 2.
9. The curable composition according to any one of 1. to 8., in which the azole compound contains at least one selected from the group consisting of benzotriazole and tolyltriazole.
10. A curable composition according to any one of 1. to 9., in which the reducing agent contains thiourea or a derivative thereof.
11. The curable composition according to any one of 1. to 10., in which a water contact angle of a surface of the cured test film is 80° to 90°.
12. The curable composition according to any one of 1. to 11., in which in a case where a breaking elongation is denoted by L1 (%) in a case where a 1BA-type dumbbell produced by aging the curable composition at 23°C for 24 hours is used as a sample and a tensile test is carried out at 23°C and a tensile rate of 5 mm/min, and a breaking elongation is denoted by L2 (%) in a case where the 1BA-type dumbbell produced by aging the curable composition at 23°C for 24 hours is immersed in pure water at 23°C for 24 hours, taken out from the water, and then aged at 23°C and 50 RH% for 1 hour, and the 1BA-type dumbbell is used as a sample and a tensile test is carried out at 23°C and a tensile rate of 5 mm/min, a value of L2/L1 is 0.7 to 1.5.
13. The curable composition according to any one of 1. to 12., in which the curable composition is a two-component type curable composition consisting of a first component and a second component, which is used by being mixed immediately before use, and the first component includes the radical polymerization initiator, and the second component includes the reducing agent.
14. A curable composition according to any one of 1. to 13., in which the curable composition is used as an adhesive.
15. A cured product of the curable composition according to any one of 1. to 14.
16. An article including the cured product according to 15.

### ADVANTAGEOUS EFFECTS OF INVENTION

By using the curable composition according to the embodiment of the present invention for adhesion of a metal material such as a zinc-plated chromate steel plate, a decrease in adhesive force can be suppressed for a long period of time.

### DESCRIPTION OF EMBODIMENTS

Hereinafter, embodiments of the present invention will be described in detail.

In the present specification, the notation "X to Y" in the description of the numerical range indicates X or more and Y or less unless otherwise specified. For example, "1% to 5% by mass" means "1% by mass or more and 5% by mass or less".

In a case where substitution or non-substitution is not explicitly indicated in the description of a group (atomic group) in the present specification, the group (atomic group) is intended to include both a group (atomic group) having no substituent and a group (atomic group) having a substituent. For example, the concept of an "alkyl group" includes not only an alkyl group not having a substituent (unsubstituted alkyl group) but also an alkyl group having a substituent (substituted alkyl group).

The expression "(meth)acryl" in the present specification represents a concept including both acryl and methacryl. The same applies to the similar description such as "(meth)acrylate".

In the present specification, the expression "PET" means polyethylene terephthalate unless otherwise specified.

Unless otherwise specified, the term "organic group" as used in the present specification means an atomic group obtained by removing one or more hydrogen atoms from an organic compound. For example, a "monovalent organic group" refers to an atomic group obtained by removing one hydrogen atom from any organic compound.

In the present specification, the "non-volatile component" means a component that remains in a cured product without volatilizing during curing under normal use conditions of the curable composition. Usually, a component other than the solvent in the curable composition corresponds to the non-volatile component.

### <Curable Composition>

The curable composition according to the present embodiment includes a polymerizable monomer having a carbon-carbon double bond, a radical polymerization initiator, an azole compound, an elastomer, and a reducing agent. As the polymerizable monomer having a carbon-carbon double bond, a polymerizable monomer having a polymerizable carbon-carbon double bond is preferable.

The water absorption rate in a case where a cured test film of 50 mm × 10 mm × 1 mm, which is obtained by interposing the curable composition between two PET films and aging at 23°C for 24 hours, is immersed in pure water at 23°C for one week is 1.5% to 3.6%, preferably 1.8% to 3.6%, and more preferably 1.9% to 3.5%.

The fact that the cured film of the curable composition according to the present embodiment has a low "water absorption rate" means that moisture is unlikely to penetrate the cured film. Although the details are unknown, it is considered that in a case where moisture penetrates between the cured film and an adherend, the adhesive force decreases. Therefore, the decrease in adhesive force over time can be suppressed by using the curable composition according to the present embodiment, which is capable of forming a cured film that is difficult for moisture to penetrate, for the adhesion of a metal material.

On the other hand, a material with an excessively low water absorption rate is generally considered to have low hydrophilicity, making it difficult to adhere to an oxide, a hydroxide, or the like on the surface of the adherend. In consideration of this point, in the curable composition according to the present embodiment, a lower limit value is set for the water absorption rate.

In addition, the curable composition according to the present embodiment contains an azole compound. The azole compound has a property of being adsorbed on a metal surface. Therefore, it is presumed that the curable composition contains an azole compound, and thus an adhesiveness of the cured product to the metal surface is increased, and thus the adhesiveness is increased.

In a case where the curable composition according to the present embodiment contains an azole compound, it is also possible to suppress the corrosion of the surface of the metal which is the adherend. This "corrosion suppressing effect" can be further enhanced by appropriately adjusting the specific structure of the azole compound, a used amount of the azole compound, and the like. Since the metal as the adherend is naturally preferable not to be corroded, the curable composition according to the present embodiment having a corrosion suppressing effect is industrially preferable.

As described above, the curable composition according to the present embodiment is considered to suppress a decrease in adhesive force over a long period of time when used as an adhesive, due to the synergistic effect of the cured film's resistance to moisture penetration and the inclusion of an azole compound.

Incidentally, the curable composition having a small water absorption rate in a case of being formed into a cured product as in the present embodiment can be manufactured by using an appropriate material in an appropriate amount. Specifically, the composition of Examples described later can be referred to. Examples of the viewpoint of selecting the material include (i) using a polymerizable monomer containing an aryl group (preferably not substituted with a polar group) such as a phenyl group, (ii) using a polymerizable monomer containing an alicyclic group (preferably not substituted with a polar group) such as an isobornyl group, (iii) not using a polymerizable monomer having a hydrophilic structure such as an alkylene oxide chain (even in a case of using the polymerizable monomer, the amount thereof is small), and (iv) increasing the crosslinking density by using a polyfunctional polymerizable monomer.

Hereinafter, the components that can be contained in the curable composition according to the present embodiment and the characteristics of the curable composition of the present embodiment will be described.

### (Polymerizable Monomer Having Polymerizable Carbon-Carbon Double Bond)

The curable composition according to the present embodiment contains a polymerizable monomer having a polymerizable carbon-carbon double bond.

Hereinafter, a polymerizable monomer having a polymerizable carbon-carbon double bond may be simply referred to as a "polymerizable monomer".

The polymerizable monomer preferably includes a (meth) acrylic monomer. That is, the polymerizable monomer preferably has a (meth)acryloyl group as a structure including a polymerizable carbon-carbon double bond.

The polymerizable monomer preferably includes a monofunctional monomer (monomer having one polymerizable carbon-carbon double bond in one molecule). As the monofunctional monomer, a monofunctional (meth)acrylic monomer is preferable.

By blending the polymerizable monomer with the monofunctional (meth)acrylic monomer, for example, heat cycle properties can be improved in a case where the curable composition is used as an adhesive. It is presumed that this is because the cured product of the curable composition is moderately flexible by blending the polymerizable monomer with the monofunctional (meth)acrylic monomer as a center.

Specifically, the ratio of the monofunctional (meth)acrylic monomer in the fully polymerizable monomer is preferably 80% to 100% by mass, more preferably 80% to 97% by mass, still more preferably 85% to 97% by mass, and particularly preferably 85% to 95% by mass. Incidentally, in a case where the ratio of the monofunctional (meth)acrylic monomer in the fully polymerizable monomer is not 100% by mass, the monomer to be used in combination with the monofunctional (meth)acrylic monomer can be, for example, a polyfunctional (meth)acrylate monomer, preferably an epoxy (meth)acrylate described later.

In a case where the ratio of the monofunctional (meth)acrylic monomer in the fully polymerizable monomer is large, a ratio of a polyfunctional monomer (monomer having two or more polymerizable carbon-carbon double bonds in one molecule) in the entire polymerizable monomer is inevitably small. It is preferable that the polymerizable monomer does not include the polyfunctional monomer or includes a small amount of the polyfunctional monomer. Specifically, the ratio of the polyfunctional monomer in the entire polymerizable monomer is preferably 0% to 10% by mass, more preferably 0% to 8% by mass, and still more preferably 0% to 6% by mass.

In order to obtain a cured film having a small water absorption rate, the polymerizable monomer preferably includes a polymerizable monomer having an aryl group (preferably not substituted with a polar group) such as a phenyl group. For the same reason, it is preferable that the polymerizable monomer is a polymerizable monomer having an alicyclic group (preferably not substituted with a polar group) such as an isobornyl group. Incidentally, these polymerizable monomers may contribute to the improvement of the durability and mechanical properties of the cured product based on the rigidity of the aryl group or the alicyclic group.

From the viewpoint of obtaining a cured film having a small water absorption rate, it is preferable that the polymerizable monomer does not include (or includes a small amount of) a polymerizable monomer having a structure with high hydrophilicity, such as an alkylene oxide chain. Specifically, the proportion of the polymerizable monomer having an alkylene oxide chain in the entire polymerizable monomers is preferably 0% to 10% by mass, more preferably 0% to 5% by mass, and still more preferably 0% to 3% by mass.

On the other hand, from the viewpoint of improving an adhesiveness to the adherend in a case where the curable composition is used as an adhesive, the polymerizable monomer may contain a (meth)acrylate having a polar group, such as a (meth)acrylate having a hydroxy group.

Examples of the polymerizable monomer that can be used are shown below.

Linear or branched alkyl (meth)acrylates: Specifically, monofunctional (meth)acrylic acid-based monomers such as methyl (meth)acrylate, ethyl (meth)acrylate, propyl (meth)acrylate, isopropyl (meth)acrylate, n-butyl (meth)acrylate, isobutyl (meth)acrylate, n-hexyl (meth)acrylate, isohexyl (meth)acrylate, n-octyl (meth)acrylate, iso-octyl (meth)acrylate, 2-ethylhexyl (meth)acrylate, nonyl (meth)acrylate, decyl (meth)acrylate, lauryl (meth)acrylate, and stearyl (meth)acrylate.

In a case where a linear or branched alkyl (meth)acrylate is used, the amount thereof is preferably 10% to 50% by mass and more preferably 20% to 45% by mass with respect to the entire polymerizable monomer.

(Meth)acrylate having a hydroxy group, particularly (meth)acrylate having a hydroxyalkyl group: specifically, monofunctional (meth)acrylic monomers such as 2-hydroxypropyl (meth)acrylate, 2-hydroxyethyl (meth)acrylate, and 4-hydroxybutyl (meth)acrylate.

In a case where the (meth)acrylate having a hydroxy group is used, the amount thereof is preferably 10% to 45% by mass and more preferably 15% to 40% by mass with respect to the entire polymerizable monomer.

Polymerizable monomer having an alicyclic group: Specifically, monofunctional (meth)acrylic monomers such as dicyclopentenyloxyethyl (meth)acrylate, norbornene (meth)acrylate, dicyclopentanyl (meth)acrylate, isobornyl (meth)acrylate, tetrahydrofurfuryl (meth)acrylate, cyclohexyl (meth)acrylate, and dicyclopentanyl (meth)acrylate.

In a case where a polymerizable monomer having an alicyclic group is used, the amount thereof is preferably 3% to 30% by mass and more preferably 5% to 20% by mass with respect to the total amount of the polymerizable monomers.

Polymerizable monomer having an aromatic group: specifically, monofunctional (meth)acrylic monomers such as benzyl (meth)acrylate, phenyl (meth)acrylate, and phenoxyethyl (meth)acrylate.

In a case where a polymerizable monomer having an aromatic group is used, the amount thereof is preferably 5% to 30% by mass and more preferably 5% to 20% by mass with respect to the total amount of the polymerizable monomers.

In addition to the above-described polymerizable monomer (mainly a monofunctional (meth)acrylic monomer), the curable composition according to the present embodiment may contain an epoxy (meth)acrylate. The epoxy (meth)acrylate is a compound obtained by reacting all epoxy groups in an epoxy compound with (meth) acrylic acid, and has a (meth)acryloyl group. In a case where the polymerizable monomer includes an epoxy (meth)acrylate monomer, it is easy to achieve both fast curing properties and stress relaxation properties during curing.

The epoxy (meth)acrylate may be monofunctional or polyfunctional. From the viewpoint of balance of various performances, the epoxy (meth)acrylate is preferably polyfunctional, more preferably difunctional to tetrafunctional, and still more preferably bifunctional. Here, the n-functional group means that a molecule has n pieces of polymerizable carbon-carbon double bonds.

Specific examples of the epoxy (meth)acrylate include EBECRYL 860, EBECRYL 3200, EBECRYL 3201, EBECRYL 3412, EBECRYL 3600, EBECRYL 3700, EBECRYL 3701, EBECRYL 3702, EBECRYL 3703, EBECRYL 3708, EBECRYL 3800, EBECRYL 6040, and EBECRYL RDX63182, which are sold by Daicel-Allnex Ltd., and ME2100, PE210, PE250, SC6360, SC6400, PE110H, PE230, PE310, EA2235, EA2255, EA2259, and EA2280, which are sold by Miwon Specialty Chemical Co., Ltd. The epoxy (meth)acrylate is also sold by Shin Nakamura Chemical Co., Ltd. and Kyoeisha Chemical Co., Ltd. in addition to Daicel-Allnex Ltd.

In a case where epoxy (meth)acrylate is used, the amount thereof is preferably 1% to 15% by mass and more preferably 2% to 13% by mass with respect to the total amount of the polymerizable monomers.

The curable composition according to the present embodiment may contain only one polymerizable monomer or may contain two or more polymerizable monomers. In consideration of the balance of various performances, the curable composition according to the present embodiment preferably contains two or more polymerizable monomers.

The proportion of the polymerizable monomer in the total non-volatile component of the curable composition according to the present embodiment is preferably 50% to 99% by mass, more preferably 60% to 97% by mass, and still more preferably 70% to 95% by mass. Sufficient curing can be realized by setting the ratio of the polymerizable monomer to be sufficiently large. On the other hand, since the ratio of the polymerizable monomer is not too high, other components can be included in the polymerizable composition in a sufficient amount, and thus it is easy to balance various performances.

### (Radical Polymerization Initiator)

The curable composition according to the present embodiment contains a radical polymerization initiator. The radical polymerization initiator is not particularly limited as long as it can polymerize the polymerizable carbon-carbon double bond of the polymerizable monomer.

Preferred examples of the radical polymerization initiator include an organic peroxide, that is, a compound having a peroxide structure or a compound having a percarboxylic acid structure.

Specific examples of the preferred radical polymerization initiator include t-amylperoxybenzoate (t-pentylperoxybenzoate), t-hexylperoxybenzoate, t-hexylperoxymonoisopropyl carbonate, t-amylperoxy-3,5,5-trimethylhexanoate, t-hexylperoxy-3,5,5-trimethylhexanoate, t-butylperoxy-2-ethylhexanoate, t-butylperoxybenzoate, cumene hydroperoxide, paramenthane hydroperoxide, tertiary butyl hydroperoxide, diisopropylbenzene hydroperoxide, methyl ethyl ketone peroxide, and tertiary butyl peroxybenzoate.

The curable composition according to the present embodiment may contain only one radical polymerization initiator or may contain two or more radical polymerization initiators.

The used amount of the radical polymerization initiator is preferably 0.1 to 20 parts by mass, more preferably 0.5 to 15 parts by mass, and still more preferably 1 to 10 parts by mass with respect to 100 parts by mass of the polymerizable monomer.

### (Azole Compound)

The curable composition according to the present embodiment contains an azole compound. Any azole compound can be used as long as it has an adhesiveness to a metal surface.

Preferred examples of the azole compound include a triazole compound and a tetrazole compound. Among these, a triazole compound is preferable.

Preferred examples of the triazole compound include the following compounds having a benzotriazole structure such as benzotriazole, tolyltriazole (benzotriazole in which a methyl group is substituted on the benzene ring), carboxybenzotriazole, 4,5,6,7-tetrahydrobenzotriazole, 2-(2'-hydroxy-5'-methylphenyl)benzotriazole, 2-(2'-hydroxy-5'-tert-butylphenyl)benzotriazole, 2-(2'-hydroxy-3',5'-di-tert-butylphenyl)benzotriazole, and 2-(2'-hydroxy-4-octoxyphenyl)benzotriazole. It is also possible to use triazole or tetrazole which does not have a substituent.

The azole compound particularly preferably includes at least any one selected from the group consisting of benzotriazole and tolyltriazole.

The curable composition according to the present embodiment may contain only one azole compound or may contain two or more azole compounds.

From the viewpoint of balance with the adhesiveness to the adherend, the effect of preventing the corrosion of the metal material, and other performances, the used amount of the azole compound is preferably 0.1% to 5% by mass, more preferably 0.2% to 4% by mass, and still more preferably 0.3% to 3% by mass with respect to the total amount of non-volatile components of the curable composition.

### (Elastomer)

The curable composition according to the present embodiment contains an elastomer. The elastomer is considered to contribute to the improvement of the adhesive force in a case where the curable composition according to the present embodiment is used as an adhesive. Since the curable composition including the elastomer can absorb a contraction stress during curing, the cured product is considered to be less likely to peel off from the adherend, meaning that the cured product has good adhesiveness.

The type of the elastomer is not particularly limited, but preferred examples thereof include a (meth)acrylonitrile-butadiene-styrene-based resin and a (meth)acrylonitrile butadiene rubber. As the (meth)acrylonitrile-butadiene-styrene-based resin, one or more kinds of resins consisting of an acrylonitrile-butadiene-styrene (ABS)-based resin or a methyl(meth)acrylate-(meth)acrylonitrile-butadiene-styrene polymer are preferable. As the methyl(meth)acrylate-(meth)acrylonitrile-butadiene-styrene polymer, a methyl methacrylate-acrylonitrile-butadiene-styrene (MABS) polymer is preferable. As the (meth)acrylonitrile butadiene rubber, a acrylonitrile butadiene rubber (nitrile butadiene rubber) is preferable.

As the ABS-based resin, a commercially available product can be used. Examples of commercially available ABS-based resins include "TECHNOPLAST ABS" (manufactured by Techno Polymer Co., Ltd.), "UMGABS" (manufactured by UMG ABS, Ltd.), and "DENKA ABS" (manufactured by Denka Company Limited). In addition, the ABS-based resin may be an MABS polymer which is also called a transparent ABS-based resin. Examples of a commercially available product of the MABS polymer include KANEACE (Kaneka Corporation).

A commercially available product can also be used as the nitrile butadiene rubber. For example, among products sold by Zeon Corporation under the trade name "Nipol" (registered trademark), those corresponding to nitrile butadiene rubber can be appropriately selected and used.

The curable composition according to the present embodiment may contain only one elastomer or may contain two or more elastomers. For example, the above-described (meth)acrylonitrile-butadiene-styrene-based resin and (meth) acrylonitrile butadiene rubber may be used in combination. In a case of being used in combination, a combination ratio of the two components is, in terms of mass ratio, for example, the former:the latter = 1:9 to 9:1, and preferably the former:the latter = 2:8 to 8:2.

The used amount of the elastomer is preferably 5 to 35 parts by mass, more preferably 10 to 30 parts by mass, and still more preferably 10 to 25 parts by mass with respect to 100 parts by mass of the polymerizable monomer.

### (Reducing Agent)

The curable composition according to the present embodiment contains a reducing agent. Due to the action of the reducing agent, a large amount of radicals are generated from the radical polymerization initiator even at room temperature, and the curable composition can be cured. That is, room temperature curing can be realized by the action of the reducing agent.

As the reducing agent, a known reducing agent that reacts with the radical polymerization initiator to generate a radical can be appropriately used. Specific examples thereof include a tertiary amine, thiourea or a derivative thereof, and a transition metal salt.

In the present embodiment, it is particularly preferable that the reducing agent includes thiourea or a derivative thereof. Specific examples thereof include thiourea such as ethylene thiourea, acetylthiourea, dimethylthiourea, tetramethylthiourea, thioacetamide, 2-mercaptobenzimidazole, or 2-mercaptobenzothiazole, or a derivative thereof. The thiourea or a derivative thereof has tautomerism in which a structure in which a carbon atom and a sulfur atom are double-bonded and a structure in which a carbon atom and a nitrogen atom are double-bonded are exchanged, and the structures are present in an equilibrium state. In a case of coming into contact with a radical polymerization initiator, the radical polymerization initiator reacts with the radical polymerization initiator relatively slowly while gradually breaking the equilibrium state, and gently generates radicals. Therefore, it is presumed that in a case where thiourea or a derivative thereof is used as the reducing agent, the cured product of the curable composition is not excessively hard, and a cured product that is moderately flexible can be obtained. This is a preferred property in a case where the curable composition according to the present embodiment is applied to an adhesive.

The curable composition according to the present embodiment may contain only one reducing agent or may contain two or more reducing agents.

The used amount of the reducing agent is preferably 0.01 to 10 parts by mass and more preferably 0.1 to 5 parts by mass with respect to 100 parts by mass of the polymerizable monomer. In a case of using an amount of 0.01 parts by mass or more, the curing speed becomes sufficiently high, and in a case of using an amount of 10 parts by mass or less, the storage stability becomes good.

### (Acidic Phosphate Compound)

The curable composition according to the present embodiment preferably includes an acidic phosphate compound represented by General Formula (A).

According to the findings of the present inventors, this compound is considered to contribute to further improvement of the adhesiveness in a case where the curable composition of the present embodiment is used as an adhesive.

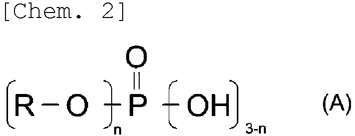

In General Formula (A), in a case where a plurality of R's are present, the R's each independently represent a group including a (meth)acryloyl group, and n is 1 or 2.

R may be (i) a (meth)acryloyl group itself or (ii) a group in which a (meth)acryloyl group is bonded to an oxygen atom through a divalent linking group.

Regarding (ii), R can be a group represented by R'-L-. Here, R' is a (meth)acryloyl group, and L is a divalent linking group. L is preferably a divalent organic group such as an alkylene group or an oxyalkylene group.

As L, -OC₂H₄-, -OC₃H₆-, -OCH₂CH(CH₃)-, -OC₄H₈-, -OC₆H₁₂-, - OC₂H₄-COO-C₅H₁₀-, one of these is a linking group in which 2 to 10 are linked (for example, -(OC₂H₄)₁₀-), and two or more of these are linking groups in which 2 to 10 are linked (for example, - OC₂H₄-OC₃H₆-).

The curable composition according to the present embodiment preferably contains, in particular, an acidic phosphoric acid compound in which n is 1 and an acidic phosphate compound in which n is 2 in General Formula (A).

The acidic phosphate compound represented by General Formula (A) is available, for example, from Johoku Chemical Co., Ltd. In addition, the acidic phosphate compound represented by General Formula (A) may be synthesized by reacting phosphoric acid with a (meth)acrylate having a hydroxy group in a side chain.

In a case where the curable composition according to the present embodiment includes the acidic phosphate compound represented by General Formula (A), the amount thereof is preferably 0.1% to 10% by mass, more preferably 0.1% to 8% by mass, and still more preferably 0.2% to 7% by mass with respect to the total amount of non-volatile components in the curable composition.

### (Other Optional Components)

The curable composition according to the present embodiment can contain optional components other than the above components as long as sufficient performance is obtained. Examples of the optional component include the following.

### · Paraffin

In order to quickly cure a portion of the curable composition in contact with air during curing of the curable composition, various paraffins can be used. Examples of the paraffin include paraffin wax, microcrystalline wax, carnauba wax, beeswax, lanolin, spermaceti, ceresin, and candelilla wax.

In a case where the curable composition according to the present embodiment contains the paraffin, it may contain only one paraffin or may contain two or more paraffins.

In a case where the curable composition according to the present embodiment includes paraffin, the amount thereof is preferably 0.01 to 3 parts by mass and more preferably 0.5 to 2 parts by mass with respect to 100 parts by mass of the polymerizable monomer. In a case of using a large amount of paraffin to some extent, it is possible to sufficiently obtain the effect of accelerating curing. On the other hand, in a case where the amount of paraffin is not too large, it is possible to obtain the effect of accelerating curing while obtaining sufficient adhesiveness.

### · Stabilizer

In order to improve storage stability, various stabilizers may be used. Examples of the type of stabilizer include (i) a compound known as a phenol-based antioxidant, such as 2,2'-methylenebis(4-ethyl-6-t-butylphenol); (ii) a quinone-based compound, such as p-benzoquinone or hydroquinone monomethyl ether; (iii) an amine-based polymerization inhibitor known as a polymerization inhibitor, such as phenothiazine, or citric acid; and (iv) a stable radical compound having a stable radical.

In a case where the curable composition according to the present embodiment contains a stabilizer, the curable composition may contain only one stabilizer or two or more stabilizers.

In a case where the curable composition of the present embodiment includes a stabilizer, the amount thereof is, for example, 0.001 to 5 parts by mass, preferably 0.001 to 3 parts by mass, more preferably 0.01 to 1.5 parts by mass, and still more preferably 0.02 to 1 part by mass with respect to 100 parts by mass of the polymerizable monomer.

### · Fluorescent Agent

In particular, in a case where the curable composition is used as an adhesive, the curable composition preferably contains a fluorescent agent in order to accurately identify the position where the curable composition is applied on the surface of the adherend. Preferred examples of the fluorescent agent include a compound that emits light upon irradiation with ultraviolet rays. Specific examples thereof include a coumarin derivative, an oxazole derivative, a stilbene derivative, an imidazole derivative, a triazole derivative, and rhodamine. Examples of the commercially available fluorescent agent include Kayalight series (manufactured by Nippon Kayaku Co., Ltd.), Hakkol series (manufactured by Showa Chemical Industry, Ltd.), and Rhodamine B (manufactured by FUJIFILM Wako Pure Chemical Corporation). It is preferable to select a fluorescent agent which does not react with other components in the curable composition. In the present embodiment, a coumarin derivative and/or an oxazole derivative is particularly preferable. Examples of the coumarin derivative include the trade name "Hakkol P" (manufactured by Showa Chemical Industry, Ltd.).

In a case where the curable composition according to the present embodiment contains a fluorescent agent, the curable composition may contain only one fluorescent agent or may contain two or more fluorescent agents.

In a case where the curable composition according to the present embodiment contains a fluorescent agent, the amount thereof is preferably 0.001 to 5 parts by mass, more preferably 0.005 to 1.0 parts by mass, still more preferably 0.008 to 0.5 parts by mass, and particularly preferably 0.01 to 0.3 parts by mass with respect to 100 parts by mass of the polymerizable monomer. In a case of using a large amount of the fluorescent agent to some extent, it is sufficiently easy to check a state of coating of an adherend with a curable composition. On the other hand, since the amount of the fluorescent agent is not too large, the effect of the fluorescent agent can be obtained while maintaining other performances such as adhesiveness.

### · Spacer

The curable composition according to the present embodiment may include a spacer in order to adjust a film thickness during use. The spacer is typically spherical particles made of a resin such as polyolefin. The spacer is also called "beads".

From the viewpoint of obtaining the effect of adjusting the film thickness and obtaining a strong adhesive force, in a case where a spacer is used, the amount of the spacer is preferably 0.1% to 3% by mass and more preferably 0.2% to 2% by mass with respect to all the non-volatile components of the curable composition.

### (One-component Type/Two-component Type)

The curable composition according to the present embodiment may be a so-called one-component type or a two-component type, that is, a form in which two components filled in separate containers are mixed immediately before use.

In the case of the two-component type, it is preferable that the polymerization initiator is contained in the first component and the reducing agent is contained in the second component. However, it is preferable that the radical polymerization initiator is contained in the first component but not in the second component, and it is preferable that the reducing agent is contained in the second component but not in the first component. By doing so, the first component and the second component are such that an unintended reaction or deterioration of the curable composition before mixing is easily prevented, and the curable (adhesive) properties can be exhibited at a relatively low temperature near room temperature after mixing the first component and the second component.

Incidentally, in a case where the curable composition according to the present embodiment is a two-component type, it is preferable to adjust the amounts of the respective components in the first component and the second component such that the curable composition after mixing the first component and the second component contains the respective components in the suitable content ranges of the respective components described above. In addition, various characteristics of the curable composition described in the present specification are related to the curable composition after mixing the first component and the second component in a case where the curable composition is a two-component type.

### (Characteristics)

As described above, the polymerizable composition of the present embodiment is considered to exhibit favorable curing due to a synergistic effect of including an azole compound and suppressing the moisture penetration into the cured product.

The "suppressing moisture penetration into the cured product" can also be evaluated by an index other than the water absorption rate.

As an example, the water contact angle of the surface of the cured product is considered to be related to the difficulty of the moisture penetration into the cured product. In other words, the curable composition from which a cured film having a relatively large water contact angle on the surface can be obtained is considered to be able to sufficiently suppress the moisture penetration that can reduce the adhesive force.

Specifically, the water contact angle of the surface of the cured film of the curable composition according to the present embodiment is preferably 80° to 90°. Here, the same cured test film as the cured test film used for measuring the water absorption rate can be used for measuring the water contact angle of the cured film.

As another example, the wetting tension of the surface of the cured product is considered to be related to the difficulty of the moisture penetration into the cured product. In other words, the curable composition from which a cured film with a wetting tension of the surface appropriately controlled can be obtained is considered to be a preferred aspect in the present embodiment.

Specifically, the wetting tension of the surface of the cured film of the curable composition according to the present embodiment is preferably 25 to 40 mN/m and more preferably 30 to 40 mN/m. Here, the same cured test film as the cured test film used for measuring the water absorption rate can be used for measuring the wetting tension of the cured film.

As still another example, in a case where the change in the mechanical properties of the cured product is small before and after the cured product of the curable composition is immersed in water, it can be interpreted that the moisture penetration into the cured product is suppressed, or even in a case where the moisture penetration into the cured product is allowed, the deterioration of the cured product is suppressed. In other words, by using, as an adhesive, a curable composition capable of forming a cured product having a small change in mechanical properties before and after immersion in water, a good adhesive force can be obtained for a long period of time.

Specifically, a 1BA type dumbbell produced by aging the curable composition at 23°C for 24 hours is used as a sample, and a breaking elongation at a tensile test at 23°C and a tensile rate of 5 mm/min is defined as L1 (%).
· A 1BA type dumbbell produced by aging the curable composition at 23°C for 24 hours is immersed in pure water at 23°C for 24 hours, taken out of water, and then aged in an environment of 23°C and 50 RH% for 1 hour, and the breaking elongation at the time of carrying out a tensile test at 23°C and a tensile speed of 5 mm/min is defined as L2 (%).
· The value of L2/L1 is preferably 0.7 to 1.5 and more preferably 0.7 to 1.0.

It is preferable that the tensile test for obtaining the L1 and the L2 is carried out according to JIS K 7161-1: 2014. In addition, the "1BA type dumbbell" is a small dumbbell of the 1BA type specified in JIS K 7161-2: 2014.

### (Uses)

As described above, the curable composition according to the present embodiment is preferably used as an adhesive. That is, the curable composition according to the present embodiment is preferably used for bonding the first member and the second member.

The curable composition according to the present embodiment is preferably capable of curing (at room temperature) without heating to bond an article (particularly, in a case of containing a polymerization initiator and a reducing agent). Of course, heating in a case of adhering the article is not excluded.

### (Method for Producing Curable Composition)

The curable composition according to the present embodiment can be produced by mixing the above-described respective components. A well-known technique can be appropriately used for a specific method of mixing. For example, the curable composition can be produced by uniformly mixing the respective components using a stirring blade.

### <Cured Product and Bonded Body (Article)>

It is possible to obtain a cured product by curing the curable composition of the present embodiment. Specifically, by using the curable composition of the present embodiment as an adhesive, it is possible to obtain a bonded body (article) including the first member, the second member, and a cured product of the curable composition for joining the first member and the second member.

The materials of the first member and the second member can be any material such as iron, a nonferrous metal, or a resin (plastic). The materials of the first member and the second member may be the same or different from each other. From the viewpoint of taking advantage of the characteristics of the curable composition according to the present embodiment, it is preferable that the material of at least one of the first member or the second member is iron or a nonferrous metal. The curable composition according to the present embodiment is particularly preferably used in a case of adhering to a metal member which has been subjected to a zinc plating chromate treatment. Here, for the sake of convenience, the "zinc-plated chromate treatment" will be described. The zinc-plated chromate treatment is a treatment in which a zinc plating is first performed on the surface of a bulk metal, and then a chromate coating film is further applied to the exposed surface of the zinc plating.

The curable composition according to the present embodiment is particularly preferably used for bonding a metal member in a speaker. Since the speaker vibrates during use, the adhesive is required to have a sufficiently strong adhesive force. In addition, since the speaker is used for a long time, it is preferable that the decrease in adhesive force is suppressed for a long period of time. The curable composition according to the present embodiment has preferable characteristics for bonding a metal member in a speaker.

The curable composition according to the present embodiment is preferably cured gradually at room temperature without heating. Specifically, the curability can be adjusted by adjusting the type and amount of the radical polymerization initiator, the kind and amount of the reducing agent, and the like.

Although an example is shown below, the time required for obtaining sufficient adhesive force at room temperature (23°C) after applying the curable composition to the adherend is preferably 2 minutes to 1 hour, more preferably 2 to 30 minutes, and still more preferably 2 to 20 minutes. In a case where the time until a sufficient adhesive force is obtained is relatively long, a certain adhesion strength can be obtained even in a case where there is a variation in the time from the application of the curable composition to the adhesion. Such properties are preferred properties in a case of adhering a large number of articles in a manner of an assembly-line system. In addition, production efficiency can be improved in a case where the time taken until the adhesion strength is exhibited is not too long.

As described above, the embodiments according to the present invention have been described; however, these are examples according to the present invention, and thus it is possible to adopt various configurations other than the above. In addition, the present invention is not limited to the above-described embodiments, and modifications, improvements, and the like within the range in which the object of the present invention can be achieved are included in the present invention.

### [Examples]

A detailed description will be given of embodiments of the present invention based on Examples and Comparative Examples. It should be noted that the present invention is not limited to Examples only.

### <Preparation of Curable Composition>

Each component shown in the table below was uniformly mixed to prepare a curable composition (first component and second component) of each of Examples and Comparative Examples. Specifically, each component shown in the table was weighed and put into a 1 L stainless steel flask. A stainless steel anchor stirring blade was placed in the flask, and the solution was stirred at 150 rpm for 24 hours using a Three One Motor "BL300" manufactured by Shinto Scientific Co., Ltd., thereby obtaining a uniform viscous liquid.

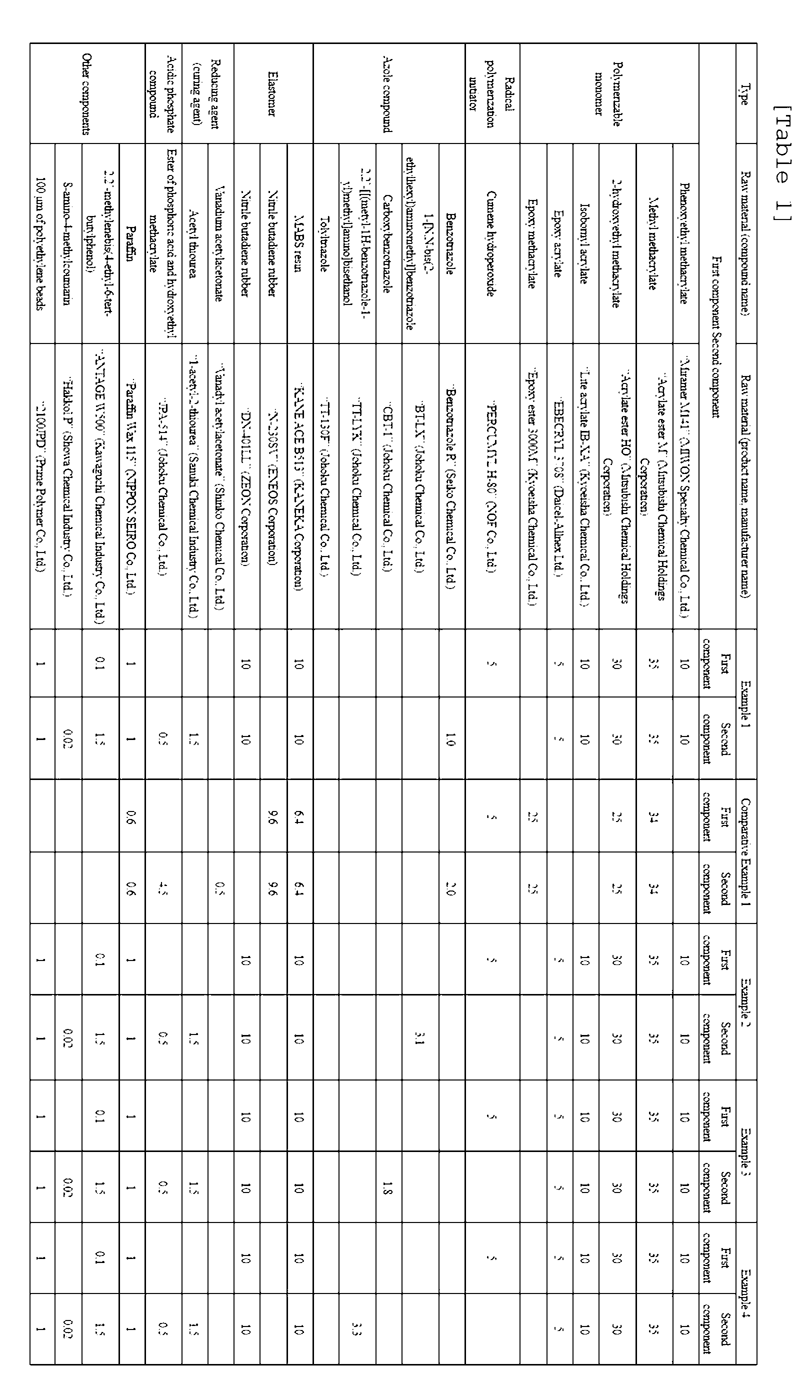

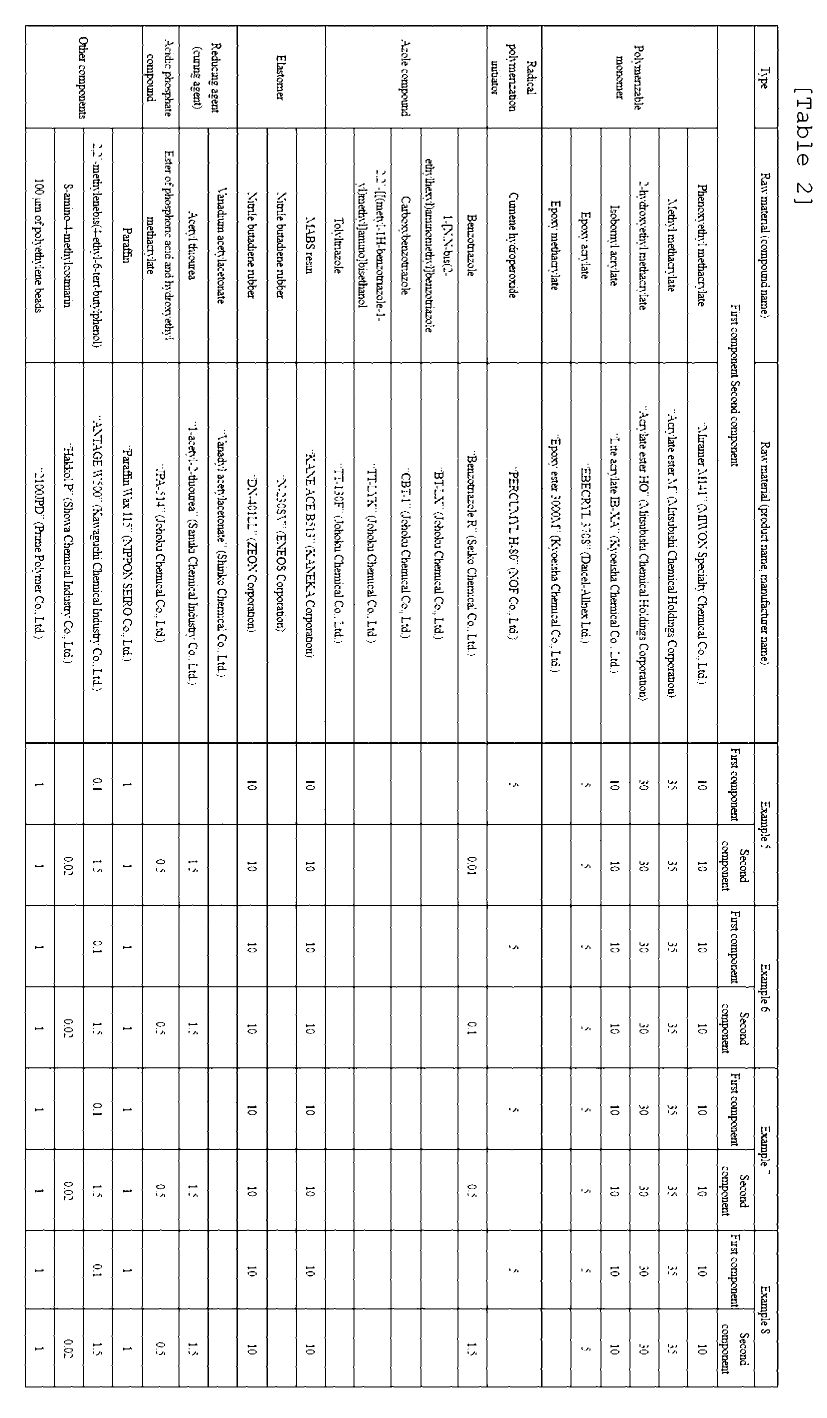

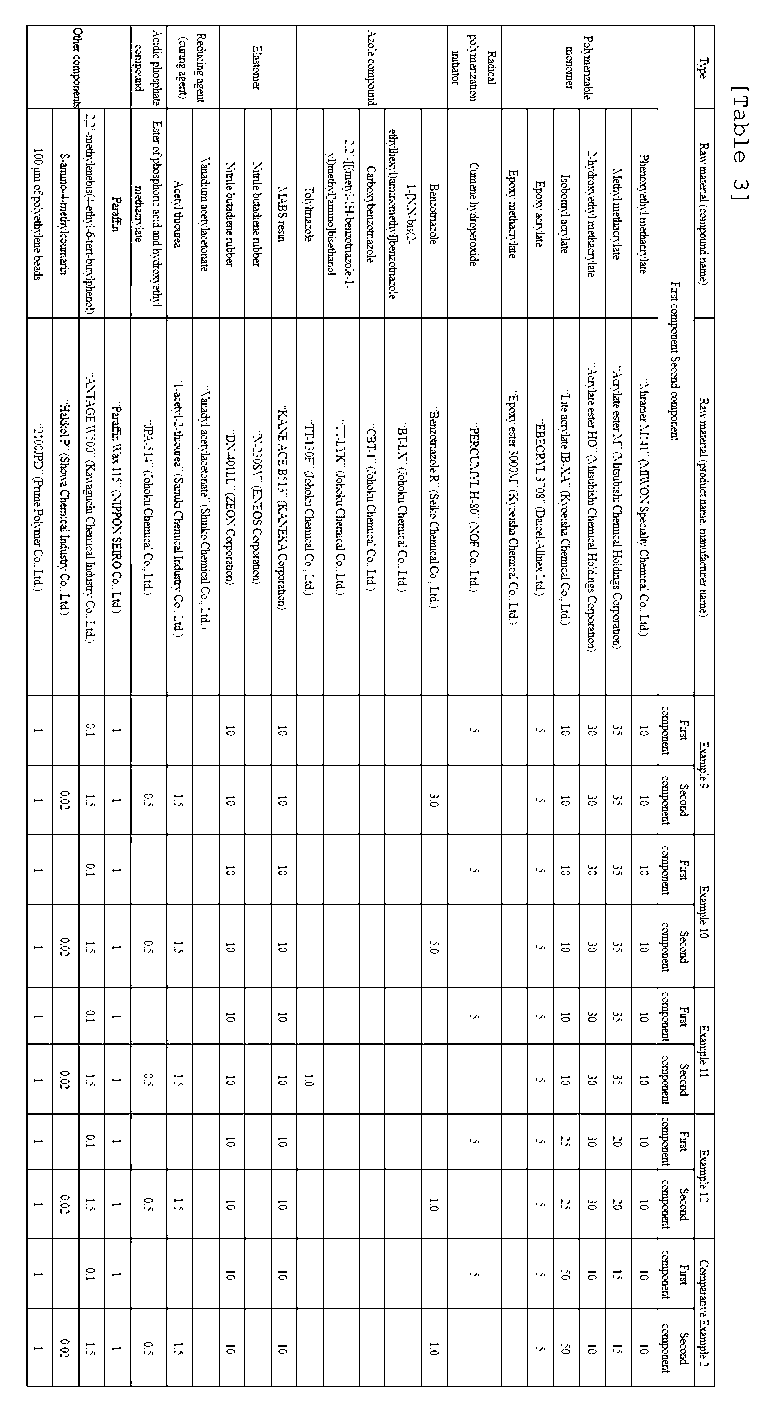

Incidentally, "EBECRYL 3708" used as the epoxyacrylate is bifunctional. "Epoxy Ester 3000M" used as the epoxy methacrylate is bifunctional. An ester of phosphoric acid and hydroxyethyl methacrylate "JPA-514" (manufactured by Johoku Chemical Co., Ltd.) which is used as the acidic phosphate compound is a mixture of an acidic phosphate compound in which n is 1 and an acidic phosphate compound in which n is 2, and has a chemical structure represented by General Formula (A) described above. In "JPA-514", R is a methacryloyl group in General Formula (A).

### <Production of Cured Test Film>

A cured test film having a size of 50 mm × 10 mm × 1 mm was produced in the following manner in an environment of 23°C and 50 RH%. Incidentally, in order to perform various measurements a plurality of times, a plurality of cured test films were produced for each of the curable compositions of each of Examples and Comparative Examples.
(1) A center portion of a 1 mm thick silicone sheet was punched out in a square shape of 50 mm × 50 mm to produce a silicone sheet mold.
(2) The silicone sheet mold produced in (1) was placed on a PET film (LUMIRROR 188 µm, manufactured by Toray Industries, Inc.).
(3) A double syringe was filled with a first component and a second component of a two-part curable composition. Then, the first component and the second component were discharged into the silicone sheet mold while being mixed in equal amounts by a static mixer. Immediately after the discharge, another PET film (LUMIRROR 188 µm, manufactured by Toray Industries, Inc.) was covered from above, and the laminate was sandwiched between two smooth glass plates, and a weight of 500 g was placed on the laminate from above. Thereafter, the coating film was aged at 23°C and 50 RH% for 24 hours.
(4) After the aging, the cured product was taken out from the silicone sheet mold. The burr of the cured product was removed to obtain a cured test film.

### <Measurement of Water Absorption Rate of Cured Test Film>

The measurement was performed according to the following procedure. The measurement was performed three times, and the average value of the water absorption rates obtained in each measurement was described as the water absorption rate in the table described later.
(1) The mass W₀ of the cured test film was measured.
(2) The cured test film was immersed in a beaker containing a sufficient amount of pure water at 23°C and allowed to stand for 1 week.
(3) The cured test film was taken out from the beaker, and water attached to the surface was wiped off. Thereafter, the mass W₁ of the cured test film was measured.
(4) The water absorption rate (%) was determined by the expression {(W₁ - WO) /W₀} × 100.

### <Measurement of Water Contact Angle of Surface of Cured Test Film>

The water contact angle was measured as follows.
(1) A cured test film and equipment used for measurement were allowed to stand in an environment of 23°C and 50% RH for 24 hours.
(2) The surface of the cured test film was wiped with a wiper containing pure water. After wiping off, the following (3) was performed within 5 minutes.
(3) The contact angle was measured by a liquid droplet method·θ/2 method using a dynamic contact angle meter. Specifically, using a device in which a Cattelan needle 18G manufactured by Kyowa Interface Science Co., Ltd. was set in DM500 manufactured by Kyowa Interface Science Co., Ltd., 2 µL of purified water manufactured by FUJIFILM Wako Pure Chemical Corporation was added dropwise on the surface of the cured test film.
(4) After adding the purified water dropwise, the contact angle after 1 second was measured.
(5) The contact angle was measured 10 times at different locations of the cured test film. Then, the average value of the obtained 10 values is shown in the table described later.

### <Measurement of Wetting Tension of Surface of Cured Test Film>

The wetting tension of the surface of the cured test film was measured as follows. In this time, as a wetting tension measuring reagent, mixed solutions No. 30 to 55 for a wetting tension test, manufactured by FUJIFILM Wako Pure Chemical Corporation, were used as they were. A new cotton swab was used for each test. In addition, the measurement was performed three times, and the average value of the obtained three values is shown in the table below.

Hereinafter, although the measurement procedure will be described in detail for the sake of caution, the following procedure is not a special procedure, and is a normal procedure in the measurement of the wetting tension using the mixed solution for a wetting tension test.
(1) A cured test film and equipment used for measurement were allowed to stand in an environment of 23°C and 50% RH for 24 hours.
(2) The surface of the cured test film was wiped with a wiper containing pure water. After wiping off, the following (3) was performed within 5 minutes.
(3) A few drops of a mixed solution for a wetting tension test with any number was added dropwise on the surface of the cured test film, and the mixed solution was spread using a cotton swab. The state of the liquid film after 2 seconds from the spread was observed, and the following results were obtained.
   The state in which the liquid film is maintained for 2 seconds or longer without being broken is a wet state. Therefore, in a case where the wetting was maintained for 2 seconds or more, the mixed solution for a wetting tension test with a higher number was further used, and conversely, in a case where the liquid film was broken in less than 2 seconds, the mixed solution for a wetting tension test with a lower number was used next.
(4) The operation of (3) was repeated to select a mixed solution for a wetting tension test that could wet the surface of the test piece accurately within 2 seconds. In this case, No. of the mixed solution for a wetting tension test, which can wet the surface of the test piece in 2 seconds, is the wetting tension of the sample. For example, in a case where the surface of the test piece can be wetted with the mixed solution No. 40 for a wetting tension test accurately within 2 seconds, the wetting tension of this sample is 40.0 mN/m.

### <Measurement of Breaking Elongation of Cured Film (before and after Water Immersion)>

The measurement was performed according to the following procedure.
(1) A curable composition was aged at 23°C for 24 hours with reference to JIS K 7161-2: 2014 to prepare a 1BA type dumbbell. Incidentally, in order to perform the measurement a plurality of times, a plurality of dumbbells were produced for each of the curable compositions of Examples and Comparative Examples.
(2) Using the dumbbell obtained in (1), a tensile test was performed under conditions of 23°C, a tensile speed of 5 mm/min, and a chuck distance of 58 mm with reference to JIS K 7161-1: 2014. Then, a numerical value of the breaking elongation was obtained. The test was carried out three times, and the average value of the three times was defined as the breaking elongation L1 (%), which is shown in the table below.
(3) The dumbbell obtained in (1) was immersed in pure water at 23°C for 24 hours and taken out from the water. Thereafter, the laminate was aged in an environment of 23°C and 50 RH% for 1 hour. Using the obtained dumbbell, a tensile test was performed under conditions of a temperature of 23°C, a tensile speed of 5 mm/min, and a distance between chucks of 58 mm with reference to JIS K 7161-1: 2014. Then, a numerical value of the breaking elongation was obtained. The test was carried out three times. Then, the average value of the three times was defined as the breaking elongation L2 (%), and was described in the table described later.
(4) The value of L2/L1 was calculated.

### <Performance Evaluation: Basic Characteristics as Adhesive>

### (Setting Time)

The curable composition of each example was evaluated in the following procedure to confirm that the curable composition was sufficiently and rapidly cured at room temperature.

In an environment of a temperature of 23°C and a humidity of 50%, according to JIS K 6850:1999, the first component and the second component of the curable composition were mixed and applied in equal amounts on one surface of one test piece (100 mm × 25 mm × 1.6 mm, a sandblasted steel plate) with a static mixer. Thereafter, another test piece (100 mm × 25 mm × 1.6 mm, sandblasted steel plate) was immediately bonded to the test piece, and the test piece was used as a sample for measuring a setting time.

The setting time (unit: minute) of the sample was evaluated immediately after the application in an environment of a temperature of 23°C and a humidity of 50% using a push-pull gauge (Model S, manufactured by Komura Corporation). Specifically, the time taken to exhibit an adhesion strength of 0.39 [MPa/3.125] or more was defined as a setting time by evaluation using a push-pull gauge and a stopwatch.

### (Adhesive Force: Tensile Shear Test)

The curable composition of each example was evaluated in the following procedure to confirm that the curable composition can strongly adhere to the adherend and has basic performance as an adhesive.

In an environment of a temperature of 23°C and a humidity of 50 RH%, according to JIS K 6850:1999, an equal amount of the first component and an equal amount of the second component of the curable composition were mixed and applied on one surface of a test piece A (thickness and material will be described later) with a static mixer. Then, a test piece B (the thickness and the material will be described later) was immediately bonded to the surface of the base material, and the bonded base material was left to stand in the same atmosphere for 24 hours to obtain a sample for measurement. The tensile shear adhesion strength of the test sample was measured under conditions of an environment of 23°C and a humidity of 50% and a tensile speed of 10 mm/min.

In order to evaluate the adhesiveness to various materials, test samples were produced with the following three combinations of test piece A/test piece B of (i) to (iii). Then, the measurement was performed three times for each of (i) to (iii), and the average value of the three measurements was defined as the tensile shear adhesion strength.
(i) Test piece A: SPCC-SD (oil surface) / Test piece B: SPCC-SD (oil surface)
   JIS G 3141, 100 mm × 25 mm × 1.6 mmt, manufactured by Test piece Co., Ltd.
(ii) Test piece A: AL5052P (oil surface) / Test piece B: AL5052P (oil surface)
   JIS H 4000, 100 mm × 25 mm × 2.0 mmt, manufactured by Test Piece Co., Ltd.
(iii) Test piece A: polycarbonate PANLITE L-1225Y / Test piece B: polycarbonate PANLITE L-1225Y ("PANLITE" is a registered trademark)
   100 mm × 25 mm × 2.0 mm, manufactured by Test piece Co., Ltd.

### <Performance Evaluation: Change in Adhesive Force of Metal Material over Time>

The change in adhesive force over time and the like in a case where the metal material was adhered using each curable composition as an adhesive were evaluated by the following procedure.

Under an environment of a temperature of 23°C and a humidity of 50%, according to JIS K 6850: 1999, the first component and the second component of the curable composition were mixed and applied in equal amounts to one surface of a zinc-plated chromate test piece using a static mixer. Then, the SUS304 blast test piece was immediately bonded to the SUS304 blast test piece, and the bonded test piece was aged in the same atmosphere for 24 hours to obtain a measurement sample. A plurality of samples for measurement (at least 9 samples per example) were prepared for the following evaluation over time.

The tensile shear adhesion strength of the test sample was measured under conditions of an environment of 23°C and a humidity of 50% and a tensile speed of 10 mm/min. The measurement was carried out three times, and the average value of the obtained three values was defined as the tensile shear adhesion strength.

Here, as the zinc-plated chromate test piece, JIS G 3144 (SPCC, SB) zinc-plated chromate 3-5 µm treatment (trivalent chromium), 100 mm × 25 mm × 1.6 mm t, manufactured by Test Piece Co., Ltd., was used.

In addition, the tensile shear adhesion strength was measured under the same conditions as described above for the test sample stored at 85°C and 95 RH% for 120 h. The measurement was carried out three times, and the average value of the obtained three values was defined as the tensile shear adhesion strength.

Further, the tensile shear adhesion strength was measured under the same conditions as described above for the test sample stored at 85°C and 95 RH% for 240 h. The measurement was carried out three times, and the average value of the obtained three values was defined as the tensile shear adhesion strength.

The above measurement and evaluation results are summarized and shown in the table below.

**[Table 4]**

| Item | | Example 1 | Comparative Example 1 | Example 2 | Example 3 | Example 4 |
|---|---|---|---|---|---|---|
| Water absorption rate (%) | | 3.2 | 4.0 | 3.4 | 3.3 | 3.0 |
| Water contact angle (°) | | 86 | 73 | 82 | 83 | 84 |
| Wetting tension (mN/m) | | 34.0 | 46.0 | 33.0 | 31.0 | 32.0 |
| Breaking elongation L1 before water immersion (%) | | 40 | 4.8 | 37 | 40 | 35 |
| Breaking elongation L2 after water immersion (%) | | 47 | 11 | 43 | 48 | 41 |
| L2/L1 | | 1.2 | 2.3 | 1.2 | 1.2 | 1.2 |
| Basic characteristic as adhesive: setting time (min) | | 12.0 | 2.3 | 11.5 | 13.5 | 12.0 |
| Adhesive force: tensile shear test | SPCC-SD (oil surface)/SPCC-SD (oil surface) | 28.0 | 30.2 | 27.0 | 21.7 | 27.0 |
| Tensile shear adhesion strength (MPa) | AL5052P (oil surface)/AL5052P (oil surface) | 21.3 | 13.3 | 16.0 | 18.0 | 15.7 |
| | Polycarbonate/polycarbonate | 3.6 | 3.5 | 7.6 | 2.5 | 7.8 |
| Change in adhesive force of metal material over time | Before elapse of time | 27.3 | 18.2 | 28.1 | 22.1 | 28.3 |
| | After 120h at 85°C and 95RH% | 20.8 | 6.3 | 17.3 | 21.7 | 12.2 |
| Tensile shear adhesionstrength (MPa) | After 240h at 85°C and 95RH% | 20.6 | 7.1 | 18.4 | 20.2 | 15.9 |

**[Table 5]**

| Item | | Example 5 | Example 6 | Example 7 | Example 8 |
|---|---|---|---|---|---|
| Water absorption rate (%) | | 3.1 | 3.2 | 3.3 | 2.9 |
| Water contact angle (°) | | 89 | 81 | 85 | 83 |
| Wetting tension (mN/m) | | 31.0 | 36.0 | 32.0 | 31.0 |
| Breaking elongation L1 before water immersion (%) | | 45 | 42 | 44 | 51 |
| Breaking elongation L2 after water immersion (%) | | 51 | 42 | 46 | 51 |
| L2/L1 | | 1.1 | 1.0 | 1.0 | 1.0 |
| Basic characteristic as adhesive: setting time (min) | | 12.0 | 12.0 | 12.5 | 13.0 |
| Adhesive force: tensile shear test | SPCC-SD (oil surface) /SPCC-SD (oil surface) | 23.7 | 25.4 | 24.6 | 26.3 |
| Tensile shear adhesion strength (MPa) | AL5052P (oil surface) /AL5052P (oil surface) | 19.8 | 19.7 | 20.6 | 19.2 |
| | Polycarbonate/polycarbonate | 2.7 | 2.9 | 2.4 | 3.6 |
| Change in adhesive force of metal material over time | Before elapse of time | 25.6 | 24.5 | 25.8 | 25.5 |
| | After 120h at 85°C and 95RH% | 20.8 | 23.5 | 21.3 | 21.7 |
| Tensile shear adhesion strength (MPa) | After 240h at 85°C and 95RH% | 20.3 | 20.5 | 21.5 | 21.1 |

**[Table 6]**

| Item | | Example 9 | Example 10 | Example 11 | Example 12 | Comparative Example 2 |
|---|---|---|---|---|---|---|
| Water absorption rate (%) | | 3.1 | 3.3 | 3.2 | 2.0 | 1.0 |
| Water contact angle (°) | | 88 | 81 | 81 | 81 | 75 |
| Wetting tension (mN/m) | | 31.0 | 38.0 | 37.0 | 36.0 | 45.0 |
| Breaking elongation L1 before water immersion (%) | | 47 | 46 | 51 | 16.0 | 46 |
| Breaking elongation L2 after water immersion (%) | | 48 | 47 | 51 | 12.9 | 2.6 |
| L2/L1 | | 1.0 | 1.0 | 1.0 | 0.8 | 0.6 |
| Basic characteristic as adhesive: setting time (min) | | 13.5 | 130 | 13.0 | 10.5 | 9.0 |
| Adhesive force: tensile shear test | SPCC-SD (oil surface) /SPCC-SD (oil surface) | 25.2 | 26.3 | 24.9 | 28.7 | 16.3 |
| Tensile shear adhesion strength (MPa) | AL5052P (oil surface) /AL5052P (oil surface) | 18.3 | 19.3 | 21.4 | 23.6 | 9.4 |
| | Polycarbonate/polycarbonate | 3.8 | 4.3 | 3.0 | 3.6 | 3.6 |
| Change in adhesive force of metal material over time | Before elapse of time | 24.3 | 27.0 | 24.9 | 29.6 | 15.5 |
| | After 120h at 85°C and 95RH% | 23.0 | 20.1 | 21.1 | 24.3 | 8.9 |
| Tensile shear adhesion strength (MPa) | After 240h at 85°C and 95RH% | 22.5 | 20.1 | 20.3 | 17.3 | 4.1 |

As shown in the above table, the water absorption rate in a case of being formed into a cured film was 1.5% to 3.6%, and in the evaluation using the curable composition of Examples including an azole compound, a decrease in the adhesive force over time (accelerated test at 85°C, 95 RH%) was suppressed.

On the other hand, in the evaluation using the curable compositions of Comparative Examples which contained the azole compound but had a water absorption rate of less than 1.5% or more than 3.6% in a case of being formed into a cured film, the adhesive force was significantly reduced over time (accelerated test at 85°C and 95 RH%).

### <Observation of Corrosion on Surface of Metal (Zinc-plated Chromate)>

For the zinc-plated chromate test piece (stored at 85°C and 95 RH% for 240 h before measurement) after the tensile shear adhesion strength was measured as described above, the presence or absence of corrosion on a test piece surface was visually observed.

As a result of the observation, in Examples 2 to **5,** corrosion (rust) was observed in the portion of the test piece surface to which the curable composition was applied. On the other hand, in Examples 1 and 6 to 12, no corrosion (rust) was observed in the portion of the test piece surface to which the curable composition was applied.

The above results are considered to indicate that the corrosion of the metal adherend can be highly suppressed depending on the type and amount of the azole compound.

This application claims priority based on Japanese Patent Application No. 2022-133920 filed August 25, 2022, the entire disclosure of which is incorporated herein by reference.

## Claims

1. A curable composition comprising:
a polymerizable monomer having a carbon-carbon double bond;
a radical polymerization initiator;
an azole compound;
an elastomer; and
a reducing agent,
wherein, in a case where a cured test film having a size of 50 mm × 10 mm × 1 mmt, which is obtained by sandwiching the curable composition between two PET films and aging the curable composition at 23°C for 24 hours, is immersed in pure water at 23°C for one week, a water absorption rate is 1.5% to 3.6%.

2. The curable composition according to Claim 1,
wherein the polymerizable monomer contains a (meth)acrylic monomer.

3. The curable composition according to Claim 1 or 2,
wherein the polymerizable monomer contains a monofunctional (meth)acrylic monomer.

4. The curable composition according to Claim 1 or 2,
wherein the polymerizable monomer contains an epoxy (meth)acrylate.

5. The curable composition according to Claim 1 or 2,
wherein a ratio of monomers having two or more carbon-carbon double bonds in one molecule to all the polymerizable monomers is 0% to 10% by mass.

6. The curable composition according to Claim 1 or 2,
wherein the elastomer contains at least any one selected from the group consisting of an ABS-based resin and a nitrile butadiene rubber.

7. The curable composition according to Claim 1 or 2, further comprising:
an acidic phosphate compound represented by General Formula (A), 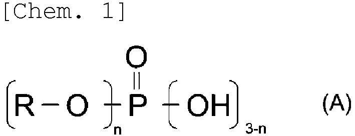
in General Formula (A), in a case where a plurality of R's are present, the R's each independently represent a group including a (meth)acryloyl group, and n is 1 or 2.

8. The curable composition according to Claim 7,
wherein the curable composition contains, in General Formula (A), an acidic phosphate compound in which n is 1, and an acidic phosphoric acid compound in which n is 2.

9. The curable composition according to Claim 1 or 2,
wherein the azole compound contains at least one selected from the group consisting of benzotriazole and tolyltriazole.

10. The curable composition according to Claim 1 or 2,
wherein the reducing agent contains thiourea or a derivative thereof.

11. The curable composition according to Claim 1 or 2,
wherein a water contact angle of a surface of the cured test film is 80° to 90°.

12. The curable composition according to Claim 1 or 2,
wherein, in a case where a breaking elongation is denoted by L1 (%) in a case where a 1BA-type dumbbell produced by aging the curable composition at 23°C for 24 hours is used as a sample and a tensile test is carried out at 23°C and a tensile rate of 5 mm/min, and a breaking elongation is denoted by L2 (%) in a case where the 1BA-type dumbbell produced by aging the curable composition at 23°C for 24 hours is immersed in pure water at 23°C for 24 hours, taken out from the water, and then aged at 23°C and 50 RH% for 1 hour, and the 1BA-type dumbbell is used as a sample and a tensile test is carried out at 23°C and a tensile rate of 5 mm/min, a value of L2/L1 is 0.7 to 1.5.

13. The curable composition according to Claim 1 or 2,
wherein the curable composition is a two-component type curable composition consisting of a first component and a second component, which is used by being mixed immediately before use, and
the first component includes the radical polymerization initiator, and the second component includes the reducing agent.

14. The curable composition according to Claim 1 or 2,
wherein the curable composition is used as an adhesive.

15. A cured product of the curable composition according to Claim 1 or 2.

16. An article comprising the cured product according to Claim 15.
